Europäisches Patentamt

(19) European Patent Office

Office européen des brevets

(11) Publication number: **0 141 445**
**B1.**

(12) **EUROPEAN PATENT SPECIFICATION**

(45) Date of publication of patent specification: **15.03.89**

(51) Int. Cl.⁴: **G 06 F 1/00**

(21) Application number: **84201302.1**

(22) Date of filing: **11.09.84**

(54) **Stand-alone functional apparatus comprising a micro-computer.**

(30) Priority: **14.09.83 NL 8303167**

(43) Date of publication of application:
**15.05.85 Bulletin 85/20**

(45) Publication of the grant of the patent:
**15.03.89 Bulletin 89/11**

(84) Designated Contracting States:
**DE FR GB IT NL SE**

(56) References cited:
**EP-A-0 117 735**
**WO-A-81/01066**
**GB-A-2 044 486**

**IBM TECHNICAL DISCLOSURE BULLETIN, vol.
26, no. 3A, August 1983, page 1234, New York,
USA; R.F. HERALD et al.: "Fault-activated
reset"**

**PATENTS ABSTRACTS OF JAPAN, vol. 7, no.
202(P-221)(1347), 7th September 1983, page
80P221; & JP - A - 58 99822 (CASIO KEISANKI
K.K.) 14-06-1983**

(73) Proprietor: **N.V. Philips' Gloeilampenfabrieken
Groenewoudseweg 1
NL-5621 BA Eindhoven (NL)**

(72) Inventor: **van Loon, Gerardus Maria
c/o INT. OCTROOIBUREAU B.V. Prof. Holstlaan 6
NL-5656 AA Eindhoven (NL)**

(74) Representative: **Kooiman, Josephus Johannes
Antonius et al
INTERNATIONAAL OCTROOIBUREAU B.V. Prof.
Holstlaan 6
NL-5656 AA Eindhoven (NL)**

Courier Press, Leamington Spa, England.

**Description**

A. Background of the invention

A(1). Field of the invention

The invention relates to stand-alone functional apparatus, particularly for general consumer use, such as a television receiver, a radio receiver, a laundry or dish washing machine with different washing programs, or an irradiation device ("sun lamp") for domestic use with an adjustable irradiation time.

The invention relates more specifically to a stand-alone functional apparatus comprising a control circuit in the form of a micro-computer.

The term stand-alone functional apparatus is to be understood to means apparatus that can operate independently without being subordinate to an external device; that is apparatus which does not operate like peripheral apparatus subordinate to a central computer.

A(2). Description of the prior art

In general, a stand-alone functional apparatus comprises a plurality of independent or mutually cooperating processing circuits, whose operation is controlled by the control circuit. These circuits receive status data from the control circuit or apply status data thereto. These status data are indicative of the state in which a processing circuit is, or to which state it must adjust itself. In a TV-receiver they represnt, for example, the channel or program number the receiver is tuned to, or settings for tone, volume, luminance, contrast, etc.

To render it possible to apply the correct status data to the different processing circuits, a plurality of control circuits are coupled to the micro-computer which serves as the control circuit. The micro-computer comprises an internal non-volatile memory having a plurality of adddressable memory locations which are each addressable by means of a program counter. Each memory location comprises a given processing step which is represented by a predetermined code word. A group of mutually associated processing steps is called a control program. The number of such control programs stored in the internal non-volatile memory differs greatly from apparatus to apparatus.

Although micro-computer are very suitable for use as a control circuit, the mode of operation of the most contemporary micro-computers has been found to be far from reliable when they are used in an environment in which an electromagnetic field is present which may change considerably. Such a situation occurs, for example, in television receivers. As is known, there is a voltage of approximately 25,000 Volts between the anode and the cathode of the picture tube of a TV-receiver. Breakdown phenomena may occur due to contaminations in the picture tube. One such breakdown phenomenon may be considered to be a current pulse which has a rise time of approximately 5 nano seconds, a peak value of approximately 120 Amp. and a duration of approximately 100 nano seconds. Such a current pulse generates voltage pulses everywhere in the TV-receiver and consequently also in the micro-computer. This may result in the micro-computer assuming an undefined state, because of the content of one or more internal registers of the micro-computer, such as the program counter, stack pointer, volatile memory, gate registers, etc. being changed and the new contents not being associated with each other. The normal functioning of the micro-computer and consequently also the normal functioning of the functional apparatus is seriously disturbed thereby. With a TV-receiver this usually results in the picture disappearing completely and the micro-computer no longer responding to changes in the states of processing circuits, which gives the user the impression that the TV-receiver is defective.

B. Object and summary of the invention

Similar problems may arise when an apparatus which is under control or the control circuit itself is switched on. In such cases it is suggested in GB—A—2 044 486 that a stand-alone apparatus of the above described type be provided with a memory having a plurality of addressable non-volatile memory locations for storing auxiliary status data for each of the processing circuits. In an initialization program such auxiliary status data is applied to the processing circuits as soon as the system is switched on to define their states.

B. Object and summary of the invention

It is an object of the present invention to provide a stand-alone functional apparatus comprising a control circuit in the form of a micro-computer which not only defines the states of the processing circuits after the apparatus has been switched on, but which when in operation is automatically reset to a defined state after an undefined state has occurred due to a disturbance for redefining the states of the processing circuits under control.

According to the invention the control circuit not only includes in its internal non-volatile program memory a plurality of control programs, but also a check program forming part of at least one of the control programs for detemining the allowable execution of that control program, and a recovery program which is initialized by the check program and executed after the execution of the check program in the event that it has been determined that the execution of that control program is not allowed.

If the micro-computer suddenly executes an other control program due to a disturbance, then this situation is determined by the check program as a malfunction, as a result thereof the recovery program is started immediately. In the case of, for example, a TV-receiver the execution of this recovery program results in that the receiver is being returned to either a predetermined channel or program or to the channel or program to which it was tuned prior to the disturbance. It is this channel or program number which as auxialiary status data has been stored in the non-volatile memory locations, possibly together with the contrast settcng, luminance setting, etc. for that channel or program.

Another auxiliary status data may be a code word indicating that the receiver is in the stand-by mode. This, at all times, prevents the receiver from being switched on due to a malfunction.

It is noted that in EP—A—0 117 735 there is described a stand-alone functional apparatus of the type disclosed above and having a plurality of processing circuits controlled by a control circuit in the form of a micro-computer which receives status data therefrom or applies status data thereto. It also includes a non-volatile memory for storing auxiliary status data for said processing circuits. The program memory of the micro-computer includes a check program .to find out whether the auxiliary status data have to be applied to the processing circuits or other status data. It also includes a recovery program to apply the auxiliary status data to the processing circuits when so determined. After the execution of these two programs the usual control program starts. In this prior art stand-alone apparatus the check program does not form part of at least one of the control programs and does not determine the allowable execution of a control program, also the recovery program is not executed in the event that a disturbance has taken place during operation of the apparatus.

C. Short description of the Figures

Figure 1 shows schematically the general structure of a televsion receiver which comprises a control circuit in the form of a micro-computer.

Figures 2 to 7 inclusive show some flow charts to explain the operation of the receiver shown in Figure 1.

D. Description of embodiments
D(1). General structure of a TV-receiver

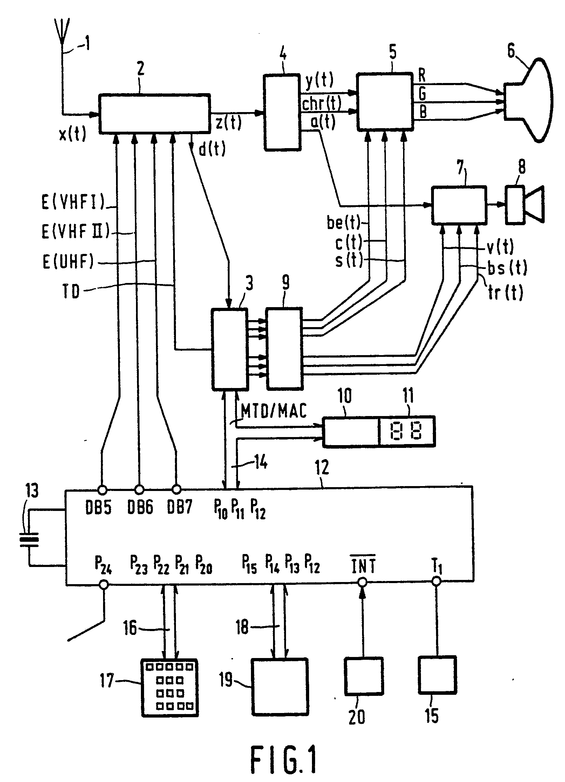

Figure 1 shows schematically the general structure of a television receiver. It comprises an aerial 1 for receiving a video signal which is processed in a number of processing circuits. More specifically, the received video signal x(t) is applied to a UHF/VHF-tuning circuit 2, which als receives frequency band status data E(VHF I), E(VHF II) or E(UHF) to enable tuning of the receiver to a frequency within the respective frequency bands VHF I, VHF II or UHF. This tuning circuit 2 also receives tuning datum TD to tune this tuning circuit to the frequency of the desired transmitter in the frequency band chosen. This tuning data TD is supplied by an auxiliary circuit 3 in response to tuning status data MTD applied thereto.

The tuning circuit 2 supplies a demodulated video signal z(t), and an oscillator signal d(t) whose frequency is compared in the auxiliary circuit 3 to a desired frequency which is characterized by the tuning status data MTD. In addition, the modulated video signal z(t) is applied to a separating circuit 4, which produces a luminance signal y(t), a chrominance signal chr(t) and an audio signal a(t). The signals y(t) and chr(t) are applied to a video processing circuit 5 which produces three signals R, G and B which are applied to a video display device 6. The audio signal a(t) is applied to an audio reproducing device 8 via an audio processing circuit 7.

For the control of the luminance, contrast and colour saturation of the displayed picture, and volume, base and treble of the sound to be reproduced, the video processing circuit 5 receives control signals be(t), c(t) and s(t) and the audio processing circuit 7 receives control signals v(t), bs(t) and tr(t). All these control signals are supplied by the auxiliary circuit 3 in response to suitably chosen control status data MAC applied to it. Particularly suitable embodiments of this auxiliary circuit 3 are the Philips types SAB 3034 or SAB 3035. These circuit types can supply the said control signals only in digital form. They are consequently converted into analog control signals with the aid of a digital-to-analog converter 9.

In the TV-receiver shown, the tuning status data MTD is also applied to the input circuit 10 of a digital display device 11 for displaying the channel number or the program number the receiver is tuned to.

The frequency band status data E(·) and also the tuning status data MTD and the control status data MAC are produced by a micro-computer 12 which receives clock pulses from a generator 13. Suitable micro-computers are for example, the Philips types MAB 8048, MAB 8049, MAB 8050, MAB 8400 etc. The following description will be based on the MAB 8049.

The frequency band-status data E(·) are taken from three gates DB5, DB6 and DB7. The tuning status data MTD and the control status data MAC are applied via a serial data bus 14 to the auxiliary circuit 3 and to the input circuit 10. This bus 14 is connected to gates $P_{10}$, $P_{11}$ and $P_{12}$. A signal which indicates whether the TV-receiver is in the switched-on state or not is applied to the micro-computer 12 by means of a gate $P_{24}$, while a video-presence signal which indicates that a video signal is received or is not received, is applied to a further gate $T_1$. This video-presence signal is produced by a video presence detector 15. In addition, a plurality of control circuits are connected to the micro-computer in order to apply predetermined data thereto. More specifically, a bus 16 which connects the micro-computer 12 to a keyboard 17 is connected to gates $P_{20}$, $P_{21}$, $P_{22}$, $P_{23}$. In addition, a bus 18 connects a non-volatile memory 19, to gates $P_{12}$, $P_{13}$, $P_{14}$, and $P_{15}$, for example, the tuning status data MTD of a number of preselected TV transmitters. In practice, this non-volatile memory 19 can be chosen such that it also comprises the non-volatile memory locations mentioned in the foregoing for storing the auxiliary status data. A third control circuit connected to the micro-computer is the receiver 20 of a remote control systm. More specifically, the output of this receiver is connected to an external interrupt input $\overline{INT}$.

D(2). TV-receiver operation

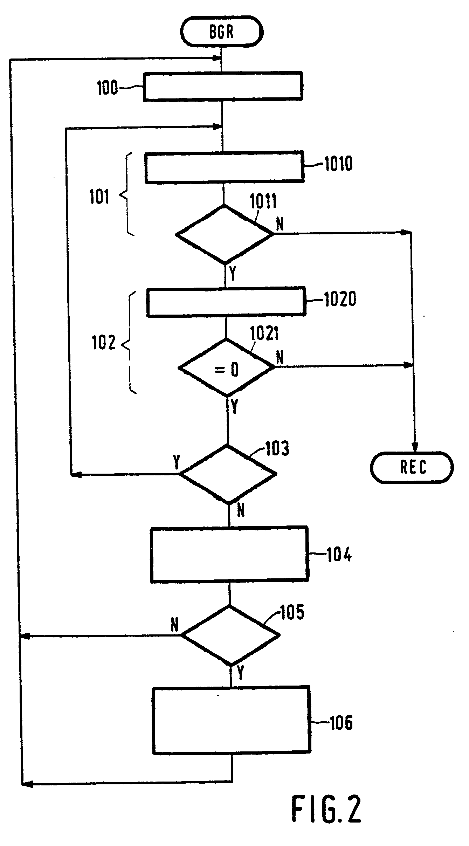

As has already been mentioned in the foregoing, the microcomputer has a non-volatile internal memory, usually a ROM, in which a plurality of control programs are stored. One of these control programs is a background program BGR which is continuously cycled through. This background programm comprises the steps which are schematically shown in Fig. 2 by means of a flow chart. More specifically, this background program comprises a preparation program 100 in which immediately after the receiver has been tuned to a predetermined transmitter, the sum is calculated of a number of data present in a number of internal registers of the micro-computer. The number thus obtained is denoted a reference check sum and is stored in a spare memory location of an auxilary memory.

To check whether or not the micro-computer has assumed an undefined state due to a malfunction, a number of check programs are cycled through. In a first check program 101, in a step 1010, the current check sum is calculated. In a step 1011 this current check sum is compared to the reference check sum. If both check sums are equal to each other, then a second check program 102 is cycled through, in which, for example, the value of a stack pointer (or the depth of the stack pointer) is determined in a step 1020. The value of the stack pointer should be zero. If it is unequal to zero this implies that the micro-computer is in an undefined state due to a malfunction resulting from a disturbance and that it was cycling through a sub-program prior to the occurrence of the disturbance. It is therefore checked in a step 1021 if this stack pointer has a value equal to zero. If it has, then still further check programs (not shown) can be cycled through.

After all the check programs have been cycled through, it is checked in a step 103 whether the receiver is still tuned to the desired transmitter which is characterized by the tuning status data MTD. If this is the case, then the sequence of check programs 101, 102 is cycled through again. If it is found that the receiver is not tuned to the desired transmitter, then a tuning program 104 is started. At the end of this program the receiver will be tuned to the desired transmitter, but it is possible that no picture is displayed. Whether or not there is a picture is determined in a step 105 in which it is checked whether the presence detector 15 indicates the presence of a video signal. If this is not the case then the preparation program 100 is started. If a video signal is present then in a step 106 the actual tuning status data is stored as auxiliary status data in an addressable non-volatile memory location and thereafter the preparation program 100 is started again. As has already been mentioned in the foregoing this non-volatile memory location is preferably part of the non-volatile memory 19, which may comprise a plurality of further addressable non-volatile memory locations for storing further control status data acting as auxiliary status data and characterizing the actual setting of quantities such as contrast, colour saturation, sound volume, etc. of the transmitter, characterized by the actual tuning status data. It is noted that a non-volatile memory is such a stalwart device that it will not be affected by electromagnetic disturbances.

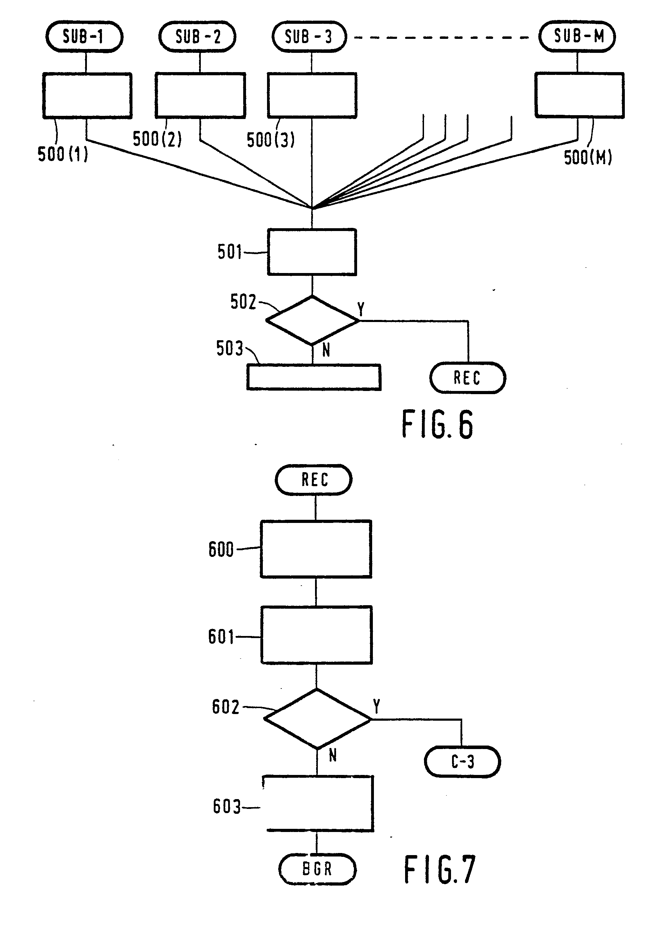

If in step 1011 it is determined that the current check sum is not equal to the reference check sum, or if it is found in step 1021 that the stack pointer is unequal to zero, then a recovery program REC is started which will be described in greater detail hereinafter with reference to Fig. 7. First it will be described via which futher control programs this recovery program can be started.

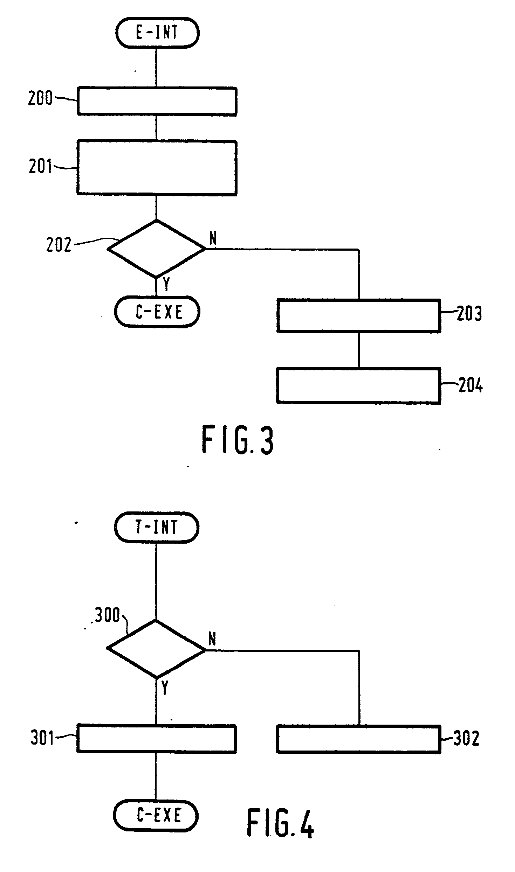

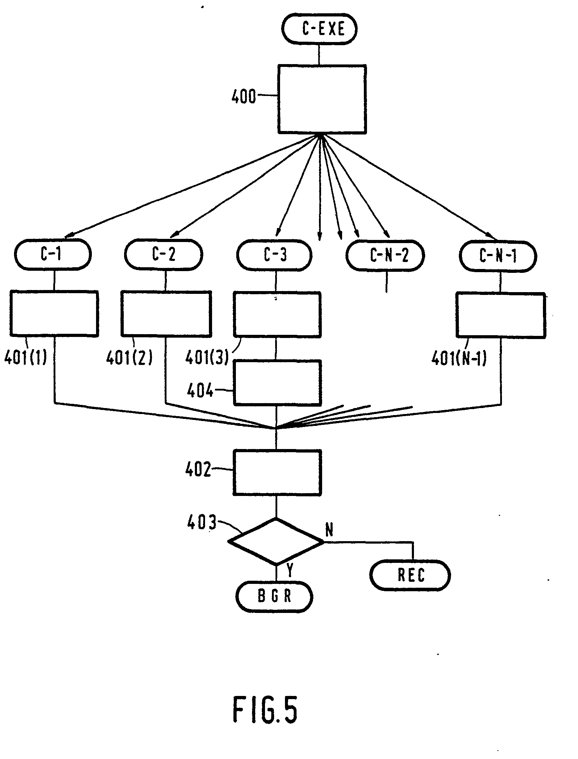

As has already been described in the foregoing, control circuits 17 and 20 are connected to the micro-computer to make it possible to apply predetermined data to the micro-computer. If, more specifically, a control command is applied to the external interrupt input $\overline{INT}$ by the receiver 20 of the remote control system, then the external interrupt program E-INT which is schematically shown in Fig. 3 is started immediately. In order to be able to check that this program is not cycled through because of a disturbance of a first part of a check program is effected. This first part is constituted by a step 200 in which a passage word is stored in a memory location of the auxiliary memory. This passage word indicates that this program is executed in response to a signal applied by the receiver 20 to the input $\overline{INT}$. In step 201 the code format of this signal is determined and in step 202 it is checked whether this code format is the correct format. If the received signal does not have the correct code format then in step 203 the passage word is reset and in step 204 a return is effected to the control program which was cycled through at the moment at which the interrput control command occurred. If the received signal does have the correct code format than a command execute program C-EXE is started which will be described in greater detail hereinafter with reference to Fig. 5, and which includes a second part of the interrupt check program.

The command-execute program C-EXE can alternatively be started by a time-interrupt program T-INT which is shown schematically in Fig. 4. This time-interrupt program is started each time after a predetermined time interval of, for example, 20 msec. This time interval is determined by a software counter. This interrupt program has for its object to process data applied to the micro-computer via the keyboard 17. to that end, in a step 300 the keyboard is first scanned in a customary manner by the micro-computer. Each time it is found that a key has been operated, and consequently a control command is transmitted, a first part of an interrupt check program is effected. This first part is constituted by a step 301 in which a passage word is stored in a memory location of the auxiliary memory, whereafter the command-execute program C-EXE is started. If it is found that no key of the keyboard is operated, then in step 302 a return is effected to the control program which was cycled through at the instant at which the time-interrupt occurred.

The command-execute program C-EXE which is started after a command has been applied to the micro-computer *via* the remote control system or by means of the keyboard 17, is shown schematically in Fig. 5. It comprises N auxiliary execute programs C-1, C-2, ... , C-N-1, one for each control command. Such an auxiliary execute program is activated in customary manner by means of a step 400 in which a predetermined auxiliary execute program is unambiguously assigned to a received control command. After the relevant control command has been effected in step 401(·) the second part of the interrupt check program is effected. This second part is constituted by a step 402 in which the passage word stored in the memory location during the first part of the interrupt check program is checked and by a third step 403 in which it is determined whether the passage word is correct. If it is, then the background program BGR (Fig. 2) is started. If, however, the passage word is not correct, then the recovery program REC is started.

It should be noted thst the auxiliary execute program C-3 is activated when the receiver has been adjusted to the "stand-by" state by means of a button reserved for that purpose. After this command has been effected in step 401(3), in step 404 the last actual tuning status data stored as auxiliary status data in a memory location of the non-volatile memory 19 is replaced by a "stand-by" code word which indicates that the receiver is in the "stand-by" condition and this code word now represents the said auxiliary status data.

A further possibility whether or not the microcomputer has assumed an undefined state due to malfunction is shown schematically in Fig. 6 and relates to the passing through of subprogram. Each time such a sub-program 500(·) has been passed through, a check program is effected consisting of a step 501 and a step 502. More specifically, in step 501 the depth of the stack pointer is determined. Thereafter it is checked in step 502 whether the depth is too deep. If it is not, then in step 503 a return is made to the control program which was passed through at the instant at which the relevant sub-programm was activated. If the stack pointer is found to be too deep then the recovery program REC is started.

The recovery program REC has a structure which is schematically shown in Fig. 7. It comprises an initializing step 600. Therein all the steps are effected which are also effected on switch-on of the receiver and the micro-computer receives *via* gate P24 a signal which is characteristic of an energized receiver. More specifically, in this initialization step all gates are *inter alia* reset, the auxiliary memory is erased, the software counter is stopped, any interrupts received *via* input $\overline{INT}$ are made inoperative, and, in addition, the status register, the stack pointer and the stack register are reset. Thereafter, in step 601 the auxiliary status data stored in the non-volatile memory 19 is conveyed to the auxiliary memory. Thereafter, in step 602 it is determined what this auxiliary status data represents. If it is the "stand-by" code word then the "stand-by" command execute program C-3 (see Fig. 5) is effected. If the auxiliary status data represents tuning status data, then in step 603 the receiver is tuned to the transmitter characterized thereby, whereafter the micro-computer proceeds to cycle through the background program BGR.

**Claim**

A stand-alone functional apparatus comprising:
—a plurality of processing circuits (2, 10, 3) for receiving status data and/or supplying status data indicative of the actual state of the processing circuit or of the state to which it has to be adjusted;
—a non-volatile memory (19) for storing auxiliary status data for at least one of the processing circuits;
a control circuit (12) in the form of a micro-computer for controlling the plurality of processing circuits and supplying and/or receiving the status data, this control circuit being coupled to the non-volatile memory (19) and includes a non-volatile program memory having stored therein a plurality of control programs for controlling the operation of at least one of the processing circuits (2, 3, 10) characterized in that the program memory further includes:
—a check program (101, 102, 200, 201, 202, 301, 402, 403, 501, 502) forming part of at least one of the control programs for determining the allowable execution of that control program; and
—a recovery program (Figure 7) which is initialized by the check program and executed after the execution of the check program in the event that it has been determined that the execution of that control program is not allowed.

**Patentanspruch**

Alleinstehende Dienstleistungsanordnung mit:
—einer Anzahl Verarbeitungsschaltungen (2, 10, 3) zum Empfangen von Statusdaten und/oder zum Liefern von Statusdaten, die für den Ist-Zustand der Verarbeitungsschaltung oder für den Zustand indikativ ist, in den diese Verarbeitungsschaltung gebracht werden soll;
—einem Permanentspeicher (19) zum Speichern von Hilfsstatusdaten für mindestens eine der Verarbeitungsschaltungen;
—einer Steuerschaltung (12) in Form eines Mikrocomputers zur Steuerung der Anzahl Verarbeitungsschaltungen und zum Liefern und/oder Empfangen der Statusdaten, wobei diese Steuerschaltung mit einem Permanentspeicher (19) gekoppelt ist und einen Permanentprogrammspeicher aufweist, in dem eine Anzahl Steuerprogramme zur Steuerung des Betriebs wenigstens einer der Verarbeitungsschaltungen (2, 3, 10) gespeichert sind, dadurch gekennzeichnet, dass der Programmspeicher weiterhin die folgenden Element aufweist:

—ein Überprüfungsprogramm (101, 102, 200, 201, 202, 301, 402, 403, 501, 502), das einen Teil wenigstens eines der Steuerprogramme bildet zum Bestimmen der erlaubten Durchführung dieses Steuerprogramms und

—ein Wiederherstellungsprogramm (Fig. 7), das von dem Uberprüfungsprogramm in Gang gesetzt wird und nachdem das Überprüfungsprogramm durchgeführt worden ist, in dem Fall durchgeführt wird, dass festgestellt wurde, dass die Ingangsetzung dieses Steuerprogramms nicht erlaubt ist.

## Revendication

Appareil fonctionnel isolé comprenant:

—plusieurs circuits de traitement (2, 10, 3) destinés à recevoir des données d'état et/ou à fournir des données d'état indicatives de l'état réel du circuit de traitement ou de l'état vers lequel il doit être ajusté;

—une mémoire non volatile (19) pour·stocker des données d'état auxiliaires pour au moins un des circuits de traitement,

—un circuit de commande (12) sous la forme d'un micro-ordinateur pour commander les divers circuits de traitement et fournir et/ou recevoir les données d'état, ce circuit de commande étant couplé à la mémoire non volatile (19) et comprenant une mémoire de programme non volatile contenant, à l'état stocké, plusieurs programmes de commande destinés à commander le fonctionnement d'au moins un des circuits de traitement (2, 3, 10);

caractérisé en ce que la mémoire de programme comprend en outre:

— un programme de contrôle (101, 102, 200, 201, 202, 301, 402, 403, 501, 502) faisant partie d'au moins un des programmes de commande pour déterminer l'exécution admissible de ce programme de commande, et

—un programme de reprise (Fig. 7) qui est initialisé par le programme de contrôle et exécuté après l'exécution du programme de contrôle au cas où il a été déterminé que l'exécution de ce programme de commande n'est pas permise.

FIG.1

FIG.2

2

FIG.3

FIG.4

FIG.5

SUB-1   SUB-2   SUB-3 — — — — — — — — SUB-M

500(1)   500(2)   500(3)   500(M)

501

502   Y

503   N   REC

## FIG.6

REC

600

601

602   Y

N   C-3

603

BGR   ## FIG.7